# EUROPEAN PATENT APPLICATION

(11) **EP 4 432 580 A1**
(43) Date of publication of application: **18.09.2024**
(21) Application number: 22891907.2
(22) Date of filing: 04.11.2022
(51) Int. Cl.: H04B 10/071

(54) **DETECTION METHOD, DETECTION APPARATUS, OPTICAL FIBER SYSTEM AND NETWORK DEVICE**

(30) Priority: 11.11.2021 CN 202111333197
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LI, Yunbo, Beijing 100032 (CN); WANG, Dong, Beijing 100032 (CN); ZHAO, Yang, Beijing 100032 (CN); LIU, Sheng, Beijing 100032 (CN); SUN, Jiang, Beijing 100032 (CN); GE, Dawei, Beijing 100032 (CN); ZHANG, Dechao, Beijing 100032 (CN)
(74) Representative: Maiwald GmbH
(86) International application number: PCT/CN2022/129854
(87) International publication number: WO 2023/083112

(57) **Abstract**

Provided in the present disclosure are a detection method, a detection apparatus, an optical fiber system and a network device. The method comprises: sending control signals to detection apparatuses, which are respectively connected to at least two optical fiber lines, so as to make the detection apparatuses transmit, according to the control signals, pulse optical signals to the connected optical fiber lines; acquiring line information of the connected optical fiber lines that is sent by the detection apparatuses, wherein the line information is determined by the detection apparatuses according to reflected optical signals which are reflected by the pulse optical signals in the optical fiber lines; and determining, according to the line information of the at least two optical fiber lines, whether the at least two optical fiber lines are co-cable lines.

## Description

### CROSS REFERENCE TO RELATED APPLICATIONS

This application claims priority to Chinese patent application No. 202111333197.7, filed on November 11, 2021, the entire contents of which are incorporated herein by reference.

### TECHNICAL FIELD

The disclosure relates to a field of transmission technology, in particular to a detection method, a detection apparatus, an optical fiber system and a network device.

### BACKGROUND

At present, the optical cable environment in China is complex and greatly affected by external weather and human factors, including severe natural disasters such as floods, earthquakes and mudslides, as well as infrastructure construction and manual vandalism, which may cause optical cables/optical fibers to be broken and cut off, resulting in communication disruptions. Therefore, in order to ensure that a communication system can operate under different disturbances, the communication system needs to be carried on optical cables with different physical routings, so that the communication system is not paralysed when an optical cable with a particular routing fails.

Due to the fact that operators have installed a large amount of optical fibers during recent network construction and development, it is difficult to effectively verify whether the optical fibers belong to the same optical cable over time. For a communication system configured with a primary system and a standby system, if an optical fiber used by the primary system and an optical fiber used by the standby system are in the same optical cable, availability may be significantly reduced. Therefore, it is necessary to effectively identify whether the optical fibers are co-cabled, so that services can be carried on optical fibers with two separated physical routings, to improve the reliability of the system.

In the related technologies, information and data on actual deployment of existing networks related to the optical fibers are not detailed and accurate enough to support accurate identification of whether two optical fibers are co-cabled. There are a great number of optical cables, and it is difficult to determine whether two links are in the same cable in hundreds of optical fibers. On-site inspection faces various operating environments and has a huge workload. Usually, it is necessary to face difficulties such as interruption or switching services. Therefore, how to solve the problem of co-cable identification has become a focus of current research.

### SUMMARY

An object of the technical solutions of the disclosure is to provide a detection method, a detection apparatus, an optical fiber system and a network device for effectively determining whether an optical fiber in a primary routing and an optical fiber in a standby routing are co-cable optical fibers.

Embodiments of the disclosure provide a detection method. The detection method includes:
sending a control signal to detection devices connected to at least two optical fiber lines respectively, so that the detection devices emit pulsed optical signals to connected optical fiber lines according to the control signal;
obtaining line information of the connected optical fiber lines sent by the detection devices, in which the line information is determined by the detection devices according to reflected optical signals of the pulsed optical signals reflected by the optical fiber lines; and
determining whether the at least two optical fiber lines are co-cable lines according to the line information of the at least two optical fiber lines.

Optionally, according to the detection method, determining whether the at least two optical fiber lines are co-cable lines according to the line information of the at least two optical fiber lines includes:
comparing first line information determined by a detection device connected to a first optical fiber line with second line information determined by a detection device connected to a second optical fiber line; and
in response to the first line information and the second line information meeting a preset similarity, determining that the first optical fiber line and the second optical fiber line are co-cable lines; or, in response to the first line information and the second line information not meeting the preset similarity, determining that the first optical fiber line and the second optical fiber line are not co-cable lines.

Optionally, according to the detection method, the first line information and the second line information each includes a plurality of pieces of parameter information, and comparing the first line information with the second line information includes:
comparing each piece of parameter information of the first line information with corresponding parameter information of the second line information, to determine whether the corresponding parameter information is a similar value parameter;
determining whether a quantity of similar value parameters between the first line information and the second line information is greater than or equal to a first preset quantity;
in response to the quantity of the similar value parameters being greater than or equal to the first preset quantity, determining that the first line information and the second line information meet the preset similarity; and
in response to the quantity of similar value parameters being less than the first preset quantity, determining that the first line information and the second line information do not meet the preset similarity.

Optionally, the detection method further includes:
in response to the quantity of the similar value parameters being greater than or equal to the first preset quantity and less than a second preset quantity, determining that the first optical fiber line and the second optical fiber line are co-cable lines and part of the first optical fiber line and the second optical fiber line are co-cable lines;
in response to the quantity of similar value parameters being greater than or equal to the first preset quantity and greater than or equal to the second preset quantity, determining that the first optical fiber line and the second optical fiber line are co-cable lines and entire of the first optical fiber line and the second optical fiber line are co-cable lines; in which
the second preset quantity is greater than the first preset quantity.

Optionally, according to the detection method, each of the optical fiber lines includes a first line and a second line, the first line is connected to a first detection device, and the second line is connected to a second detection device, and obtaining the line information of the connected optical fiber lines sent by the detection devices includes:
obtaining first line information of the first line of the connected optical fiber line sent by the first detection device, and second line information of the second line of the connected optical fiber line sent by the second detection device; in which
determining whether the at least two optical fiber lines are co-cable lines according to the line information of the at least two optical fiber lines includes:
   determining whether the at least two optical fiber lines are co-cable lines according to the first line information and the second line information of each optical fiber line in the at least two optical fiber lines.

Optionally, according to the detection method, determining whether the at least two optical fiber lines are co-cable lines according to the first line information and the second line information of each optical fiber line in the at least two optical fiber lines includes:
comparing first line information determined according to a first line of a first optical fiber line with second line information determined according to a first line of a second optical fiber line, to obtain a first comparison result; and comparing first line information determined according to a second line of the first optical fiber line with second line information determined according to a second line of the second optical fiber line, to obtain a second comparison result; and
determining whether the first optical fiber line and the second optical fiber line are co-cable lines according to the first comparison result and the second comparison result.

Optionally, according to the detection method, determining whether the first optical fiber line and the second optical fiber line are co-cable lines according to the first comparison result and the second comparison result includes:
in response to the first comparison result indicating that the first line information determined according to the first line of the first optical fiber line and the second line information determined according to the first line of the second optical fiber line meet a preset similarity, and the second comparison result indicating that the first line information determined according to the second line of the first optical fiber line and the second line information determined according to the second line of the second optical fiber line meet the preset similarity, determining that the first optical fiber line and the second optical fiber line are co-cable lines.

The embodiments of the disclosure also provide a detection method. The detection method includes:
emitting a pulsed optical signal to a connected optical fiber line;
obtaining a reflected optical signal of the pulsed optical signal reflected by the optical fiber line; and
determining line information of the connected optical fiber line according to the reflected optical signal, in which the line information is used to determine whether at least two optical fiber lines are co-cable lines.

Optionally, the at least two optical fiber lines include a first optical fiber line and a second optical fiber line, and the method includes:
in response to first line information of the first optical fiber line and second line information of the second optical fiber line meeting a preset similarity, determining that the at least two optical fiber lines are co-cable lines; or, in response to the first line information of the first optical fiber line and the second line information of the second optical fiber line not meeting the preset similarity, determining that the at least two optical fiber lines are not co-cable lines.

Optionally, in response to a quantity of similar value parameters between the first line information and the second line information being greater than or equal to a first preset quantity, the first line information and the second line information meet the preset similarity; or, in response to the quantity of similarity value parameters being less than the first preset quantity, the first line information and the second line information do not meet the preset similarity.

Optionally, in response to the quantity of the similar value parameters being greater than or equal to the first preset quantity and less than a second preset quantity, the first optical fiber line and the second optical fiber line are co-cable lines and part of the first optical fiber line and the second optical fiber line are co-cable lines; or, in response to the quantity of the similar value parameters being greater than or equal to the first preset quantity and greater than or equal to the second preset quantity, the first optical fiber line and the second optical fiber line are co-cable lines and entire of the first optical fiber line and the second optical fiber line are co-cable lines, in which the second preset quantity is greater than the first preset quantity.

Optionally, the optical fiber line includes a first line and a second line; and
emitting the pulsed optical signal to the connected optical fiber line in the at least two optical fiber lines, includes:
inputting a first pulsed optical signal transmitted along a first direction to the first line, and inputting a second pulsed optical signal transmitted along a second direction to the second line; in which
obtaining the reflected optical signal of the pulsed optical signal reflected by the optical fiber line includes:
   obtaining a first reflected optical signal of the first pulsed optical signal reflected by the optical fiber line, and obtaining a second reflected optical signal of the second pulsed optical signal reflected by the second line; and
   determining the line information of the connected optical fiber line according to the reflected optical signal includes:
      determining line information of the first line according to the first reflected optical signal, and determining line information of the second line according to the second reflected optical signal.

Optionally, the line information includes at least one of an optical fiber distance, a fusion splicing point location, a connection point location and signal attenuation information.

The embodiments of the disclosure also provide a detection apparatus. The detection apparatus includes:
a signal sending module, configured to send a control signal to detection devices connected to at least two optical fiber lines respectively, so that the detection devices emit pulsed optical signals to the connected optical fiber lines according to the control signal;
an information obtaining module, configured to obtain line information of the connected optical fiber lines sent by the detection devices, in which the line information is determined by the detection devices according to reflected optical signals of the pulsed optical signals reflected by the optical fiber lines;
a processing module, configured to determine whether the at least two optical fiber lines are co-cable lines according to the line information of the at least two optical fiber lines.

The embodiments of the disclosure also provide a detection device connected to an optical fiber line.

The detection device is configured to: emit a pulsed optical signal to the connected optical fiber line; obtain a reflected optical signal of the pulsed optical signal reflected by the optical fiber line; and determine line information of the connected optical fiber line according to the reflected optical signal, in which the line information is used to determine whether at least two optical fiber lines are co-cable lines.

Optionally, the at least two optical fiber lines are connected between a first routing node and a second routing node.

Optionally, the at least two optical fiber lines include a first optical fiber line and a second optical fiber line;
in response to first line information of the first optical fiber line and second line information of the second optical fiber line meeting a preset similarity, it is determined that the at least two optical fiber lines are co-cable lines. Or, in response to the first line information of the first optical fiber line and the second line information of the second optical fiber line not meeting the preset similarity, it is determined that the at least two optical fiber lines are not co-cable lines.

Optionally, in response to a quantity of similar value parameters between the first line information and the second line information being greater than or equal to a first preset quantity, the first line information and the second line information meet the preset similarity; or, in response to the quantity of the similarity value parameters being less than the first preset quantity, the first line information and the second line information do not meet the preset similarity.

Optionally, in response to the quantity of similar value parameters being greater than or equal to the first preset quantity and less than a second preset quantity, the first optical fiber line and the second optical fiber line are co-cable lines and part of the first optical fiber line and the second optical fiber line are co-cable lines; or, in response to the quantity of similar value parameters being greater than or equal to the first preset quantity and greater than or equal to the second preset quantity, the first optical fiber line and the second optical fiber line are co-cable lines and entire of the first optical fiber line and the second optical fiber line are co-cable lines, in which the second preset quantity is greater than the first preset quantity.

Optionally, the optical fiber line includes a first line and a second line; and
the detection device includes:
a first detection device connected to the first line and configured to detect first line information of the first line; and
a second detection device connected to the second line and configured to detect second line information of the second line.

Optionally, the first detection device is configured to input a first pulsed optical signal transmitted along a first direction to the first line, obtain a first reflected optical signal of the first pulsed optical signal reflected by the optical fiber line, and determine line information of the first line according to the first reflected optical signal; and
the second detection device is configured to input a second pulsed optical signal transmitted along a second direction to the second line, obtain a second reflected optical signal of the second pulsed optical signal reflected by the second line, and determine line information of the second line according to the second reflected optical signal.

Optionally, the line information includes at least one of an optical fiber distance, a fusion splicing point location, a connection point location and signal attenuation information.

Optionally, the detection device is an embedded optical time domain reflectometer (EOTDR).

The embodiments of the disclosure also provide an optical fiber system. The system includes:
at least two optical fiber lines connected between a first routing node and a second routing node;
detection devices, in which a signal input end of each optical fiber line is connected to at least one of the detection devices respectively, and the detection device is configured to emit a pulsed optical signal to the connected optical fiber line, obtain a reflected optical signal of the pulsed optical signal reflected by the optical fiber line, and determine line information of the optical fiber line according to the reflected optical signal; and
an analysis device, configured to determine whether the at least two optical fiber lines are co-cable lines according to line information of the at least two optical fiber lines.

Optionally, each of the optical fiber lines includes a first line and a second line, the first line is connected to a first detection device, and the second line is connected to a second detection device, and
the analysis device is configured to determine whether the at least two optical fiber lines are co-cable lines according to first line information of the first line of the optical fiber line connected to the first detection device of each optical fiber line in the at least two optical fiber lines and second line information of the second line of the optical fiber line connected to the second detection device.

Optionally, the first detection device is configured to input a first pulsed optical signal transmitted along a first direction to the first line, and determine the first line information according to a first reflected optical signal of the first pulsed optical signal reflected by the optical fiber line; and
the second detection device is configured to input a second pulsed optical signal transmitted along a second direction to the second line, and determine the second line information according to a second reflected optical signal of the second pulsed optical signal reflected by the second line.

Optionally, the line information includes at least one of an optical fiber distance, a fusion splicing point location, a connection point location and signal attenuation information.

Optionally, each of the detection devices includes an EOTDR.

The embodiments of the disclosure also provide a network device. The network device includes: a processor, a memory and a program stored on the memory and executable by the processor. When the program is executed by the processor, the detection method of any one of the above embodiments is implemented.

The embodiments of the disclosure also provide a readable storage medium having a program stored thereon. When the program is executed by a processor, the detection method of any one of the above embodiments is implemented.

At least one of the above technical solutions of the disclosure has the following beneficial effects.

According to the optical fiber system and the detection method described in the embodiments of the disclosure, the detection device capable of emitting the pulsed optical signal is provided on the optical fiber line. The detection device may determine the line information of the optical fiber line by using the reflected optical signal of the pulsed optical signal reflected by the optical fiber line. On the basis, the determined line information of different optical fiber lines is analyzed, to determine whether the different optical fiber lines are co-cable lines.

### BRIEF DESCRIPTION OF THE DRAWINGS

FIG. 1 is a schematic diagram of an optical fiber system according to an embodiment of the disclosure.
FIG. 2 is a schematic diagram of an optical fiber system according to another embodiment of the disclosure.
FIG. 3 is a flowchart of a detection method according to an embodiment of the disclosure.
FIG. 4 is a block diagram of a detection device according to an embodiment of the disclosure.

### DETAILED DESCRIPTION

In order to make technical problems to be solved by the disclosure, technical solutions and advantages more clear, a detailed description is given below with reference to the accompanying drawings and specific embodiments.

In order to effectively identify whether optical fibers in a primary routing and a standby routing are co-cable optical fibers, embodiments of the disclosure provide a detection method. A detection device capable of emitting a pulsed optical signal is provided on an optical fiber line. The detection device may determine line information of the optical fiber line by using a reflected optical signal of the pulsed optical signal reflected by the optical fiber line. On the basis, determined line information of different optical fiber lines is analyzed, to determine whether the different optical fiber lines are co-cable lines.

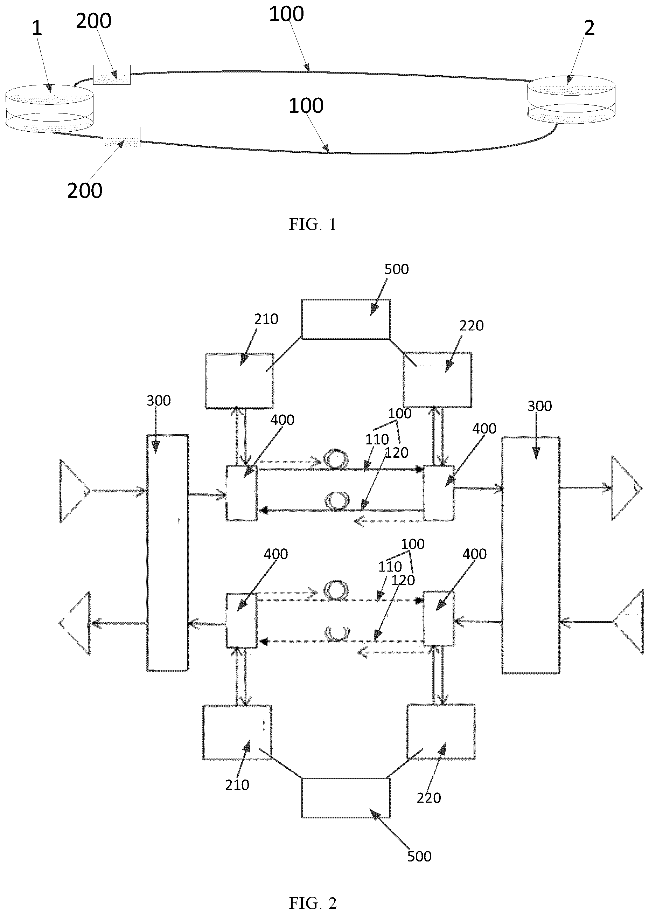

FIG. 1 is a schematic diagram of an optical fiber system according to an embodiment of the disclosure. As illustrated in FIG. 1, the optical fiber system includes:
at least two optical fiber lines 100 connected between a first routing node 1 and a second routing node 2;
detection devices 200, in which a signal input end of each optical fiber line is connected to at least one of the detection devices 200 respectively, and the detection device 200 is configured to send a pulsed optical signal to the connected optical fiber line 100, obtain a reflected optical signal of the pulsed optical signal reflected by the optical fiber line, and determine line information of the optical fiber line according to the reflected optical signal; and
an analysis device 500, configured to determine whether the at least two optical fiber lines are co-cable lines according to line information of the at least two optical fiber lines.

By adopting the optical fiber system described in embodiments of the disclosure, characteristics of light scattering and light reflection at a location point in the optical fiber system change when characteristics of the location point change. By emitting a pulsed optical signal in the optical fiber line, optical fiber transmission loss caused by scattering and absorption and structural loss caused by structural defects in the optical fiber line are analyzed using a reflected optical signal reflected by the optical fiber line when the pulsed optical signal is transmitted within the optical fiber line. A correspondence between a loss and an optical fiber length can be used to determine the line information of the optical fiber line, which includes at least one of an optical fiber distance, a fusion splicing point location, a connection point location and signal attenuation information. On the basis, the determined line information of different optical fiber lines is analyzed to determine whether the different optical fiber lines are co-cable lines.

In embodiments of the disclosure, the detection device is a device capable of emitting a pulsed optical signal, receiving a reflected optical signal of the pulsed optical signal, analyzing and processing the reflected optical signal, and obtaining the line information. Optionally, the detection devices each includes an embedded optical time domain reflectometer (EOTDR). The EOTDR may be used to analyze Rayleigh scattering and Fresnel reflected light, measure the characteristics of the optical fiber transmission loss caused by scattering and absorption and the structural loss caused by various structural defects. By setting the EOTDR on the optical fiber line, the line information of the optical fiber line can be obtained.

In detail, the EOTDR combines a light source with a detector for optical fiber quality detection and fault location. The light source in the EOTDR sends a pulsed optical signal in the optical fiber line, and the detector can receive the reflected optical signal in the optical fiber line. The transmission times of the pulsed optical signal and the reflected optical signal is used to determine transmission distances of the optical signals, in order to determine the length of the optical fiber line.

In addition, when the pulsed optical signal is transmitted along the optical fiber line, due to the existence of optical fiber fusion splicing points, connection points, large loss areas and loss of the optical fiber itself in the optical fiber line, a small part of pulse energy may be reflected to the detector. Based on this principle, after the light source emits a pulsed optical signal, the detector waits to receive all the reflected optical signals of the pulsed optical signal to obtain a detection sampling result. After all the reflected optical signals are returned to the detector, the light source continues to send another pulsed optical signal, and the detector receives the reflected optical signals corresponding to the pulsed optical signal to obtain another detection sampling result, and the process is repeated until the end of sampling time. In this way, joint analysis is performed according to the detection sampling result for each pulse optical signal, to calculate a transmission link length, a transmission link loss, an optical return loss, optical attenuation and other information of a corresponding reflected optical signal, so as to obtain a reflected energy, a transmission distance and a loss corresponding to each reflected optical signal, and determine the line information of the optical fiber line.

The EOTDR is used to emit the pulsed optical signal to realize optical fiber line detection. The pulsed optical signal emitted by the EOTDR and a service signal in the optical fiber line can be transmitted together in the optical fiber. Since a wavelength value of the service signal is different from a wavelength value of the pulsed optical signal emitted by the EOTDR, they do not interfere with each other during transmission.

In embodiments of the disclosure, optionally, as shown in FIG. 2, a detection device 200 connected to each optical fiber line 100 includes a first detection device 210 and a second detection device 220. Each optical fiber line 100 includes a first line 110 and a second line 120. The first line 110 is used to transmit a service signal along a first direction, and the second line is used to transmit the service signal along a second direction.

The first detection device 210 is connected to the first line 110 of a corresponding optical fiber line 100, and is configured to input a first pulsed optical signal transmitted along a first direction to the first line 110, and determine line information of the first line 110 according to a first reflected optical signal of the first pulsed optical signal reflected by the optical fiber line 100.

The second detection device 210 is connected to the second line 120 of the corresponding optical fiber line 100, and is configured to input a second pulsed optical signal transmitted along a second direction to the second line 120, and determine line information of the second line 120 according to a second reflected optical signal of the second pulsed optical signal reflected by the second line 120.

The first detection device and the second detection device may be the same detection device, or may be different detection devices.

In this implementation, the first detection device 210 is used to transmit the pulsed optical signal along the first direction on the first line of the optical fiber line, and the second detection device 220 is used to transmit the pulsed optical signal along the second direction on the second line of the optical fiber line. Both the first detection device 210 and the second detection device 220 transmit pulsed optical signals to the optical fiber line in two directions to obtain line information when the optical fiber line is tested in two directions. According to the line information obtained by testing the optical fiber line in two directions, whether the two optical fiber lines are co-cable lines is accurately determined.

Therefore, in the embodiments of the disclosure, the analysis device 500 is configured to determine whether at least two optical fiber lines are co-cable lines according to the first line information of the first line of the optical fiber line connected to the first detection device of each optical fiber line in the at least two optical fiber lines and the second line information of the second line of the optical fiber line connected to the second detection device.

Optionally, as illustrated in FIG. 2, the first detection device 210 and the second detection device 220 are EOTDRs. Each of the EOTDRs is connected to the optical fiber line 100 through a filter 400. The filter 400 filters an emitted pulsed optical signal and a received reflected optical signal to remove interference signals, so as to obtain accurate test results.

Optionally, the optical fiber system further includes:
an optical line protection switch (OLP) 300, connected to at least two optical fiber lines and configured to control optical line switching of the at least two optical fiber lines.

OLP is short for optical fiber line auto switch protection equipment.

In detail, the OLP 300 can control one of the two optical fiber lines 100 to be in a signal connected state and the other optical fiber line to be in a signal disconnected state according to a switch control signal of the analysis device 500, so as to emit the pulse optical signal to the two optical fiber lines 100 in turn.

Optionally, the optical fiber system also includes optical fiber connectors for realizing optical fiber connection of different line segments.

In the optical fiber system described in embodiments of the disclosure, the EOTDR is used to analyze the Rayleigh scattering and Fresnel reflected light, and measure characteristics of optical fiber transmission loss caused by scattering and absorption and structural loss caused by various structural defects. The EOTDR is set in the optical fiber line. The pulsed optical signals are emitted in two directions, so that bi-directional detection may be performed to determine the line information of the optical fiber line. On the basis, determined line information of different optical fiber lines can be analyzed to determine whether different optical fiber lines are co-cable lines.

In the embodiments of the disclosure, optionally, in the optical fiber system, in an implementation, the analysis device 500 is configured to:
compare the first line information determined by the detection device connected to the first optical fiber line with the second line information determined by the detection device connected to the second optical fiber line; and
determine that the first optical fiber line and the second optical fiber line are co-cable lines when the first line information and the second line information meet a preset similarity; and determine that the first optical fiber line and the second optical fiber line are not co-cable lines when the first line information and the second line information do not meet the preset similarity.

The detection device connected to the first optical fiber line and the detection device connected to the second optical fiber line may be the same detection device, or may be different detection devices.

Optionally, the first line information and the second line information each includes a plurality of pieces of parameter information, and a first comparing unit comparing the first line information with the second line information includes:
comparing each piece of parameter information of the first line information with corresponding parameter information of the second line information, to determine whether the corresponding parameter information is a similar value parameter;
determining whether a quantity of similar value parameters between the first line information and the second line information is greater than or equal to a first preset quantity;
when the quantity of similar value parameters is greater than or equal to the first preset quantity, determining that the first line information and the second line information meet the preset similarity; and
when the quantity of similar value parameters is less than the first preset quantity, determining that the first line information and the second line information do not meet the preset similarity.

Optionally, a first determining unit is further configured to perform:
when the quantity of the similar value parameters is greater than or equal to the first preset quantity and less than a second preset quantity, determining that the first optical fiber line and the second optical fiber line are co-cable lines and part of the first optical fiber line and the second optical fiber line are co-cable lines;
when the quantity of similar value parameters is greater than or equal to the first preset quantity and greater than or equal to the second preset quantity, determining that the first optical fiber line and the second optical fiber line are co-cable lines and entire of the first optical fiber line and the second optical fiber line are co-cable lines; in which
the second preset quantity is greater than the first preset quantity.

In the embodiments of the disclosure, optionally, in a case that each of the optical fiber lines includes a first line and a second line, and the first line is connected to a first detection device, and the second line is connected to a second detection device, obtaining the line information of the connected optical fiber lines emitted by the detection devices includes:
obtaining first line information of the first line of the connected optical fiber line sent by the first detection device, and second line information of the second line of the connected optical fiber line sent by the second detection device; in which
determining whether the at least two optical fiber lines are co-cable lines according to the line information of the at least two optical fiber lines includes:
   determining whether the at least two optical fiber lines are co-cable lines according to the first line information and the second line information of each of the at least two optical fiber lines.

The first detection device and the second detection device may be the same detection device, or may be different detection devices.

Optionally, in the detection method, determining whether the at least two optical fiber lines are co-cable lines according to the first line information and the second line information of each of the at least two optical fiber lines includes:
comparing first line information determined according to a first line of a first optical fiber line with second line information determined according to a first line of a second optical fiber line, to obtain a first comparison result; and comparing first line information determined according to a second line of the first optical fiber line with second line information determined according to a second line of the second optical fiber line, to obtain a second comparison result; and
determining whether the first optical fiber line and the second optical fiber line are co-cable lines according to the first comparison result and the second comparison result.

Optionally, in the detection method, determining whether the first optical fiber line and the second optical fiber line are co-cable lines according to the first comparison result and the second comparison result includes:
when the first comparison result indicates that the first line information determined according to the first line of the first optical fiber line and the second line information determined according to the first line of the second optical fiber line meet the preset similarity, and the second comparison result indicates that the first line information determined according to the second line of the first optical fiber line and the second line information determined according to the second line of the second optical fiber line meet the preset similarity, determining that the first optical fiber line and the second optical fiber line are co-cable lines.

In the embodiments of the disclosure, the specific implementation in which the analysis device determines whether at least two optical fiber lines are co-cable lines according to the line information of the at least two optical fiber lines is specifically described through the following detection method.

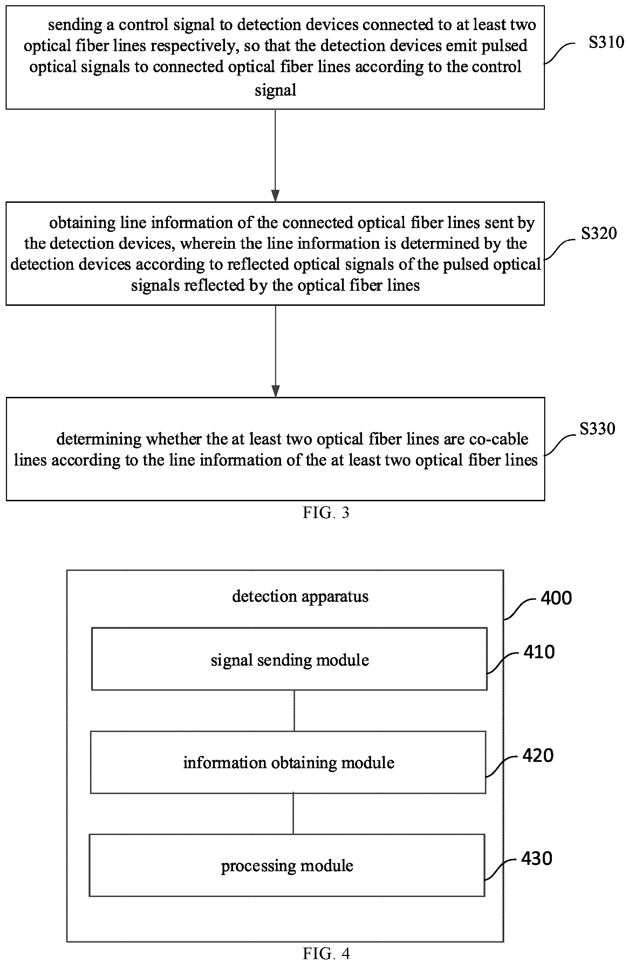

Another aspect of the embodiments of the disclosure provides a detection method. As illustrated in FIG. 3, the method includes:
S310, sending a control signal to detection devices connected to at least two optical fiber lines respectively, so that the detection devices emit pulsed optical signals to the connected optical fiber lines according to the control signal;
S320, obtaining line information of the connected optical fiber lines sent by the detection devices, in which the line information is determined by the detection devices according to reflected optical signals of the pulsed optical signals reflected by the optical fiber lines; and
S3 30, determining whether the at least two optical fiber lines are co-cable lines according to the line information of the at least two optical fiber lines.

The detection devices connected to the at least two optical fiber lines may be the same detection device, or may be different detection devices. In the case that the detection devices connected to the at least two optical fiber lines are the same detection device, the at least two optical fiber lines may be connected to the same detection device successively. In the case that the detection devices connected to the at least two optical fiber lines are different detection devices, the at least two optical fiber lines may be connected to different detection devices respectively. Emitting the pulsed optical signal to the connected optical fiber line may be that the pulsed optical signals are emitted to the connected optical fiber lines separately or successively.

By adopting the detection method described in the embodiments of the disclosure, the line information of different optical fiber lines determined by the detection device can be analyzed to determine whether the different optical fiber lines are co-cable lines.

Optionally, a primary routing and a standby routing in the optical fiber line can be determined based on routing information. By using the optical fiber system and the detection method described in the embodiments of the disclosure, it is possible to determine whether the optical fiber line in the primary routing and the optical fiber line in the standby routing are co-cable optical fiber lines.

Optionally, at step S330, determining whether the at least two optical fiber lines are co-cable lines according to the line information of the at least two optical fiber lines includes:
comparing first line information determined by a detection device connected to a first optical fiber line with second line information determined by a detection device connected to a second optical fiber line; and
when the first line information and the second line information meet a preset similarity, determining that the first optical fiber line and the second optical fiber line are co-cable lines; or, when the first line information and the second line information do not meet the preset similarity, determining that the first optical fiber line and the second optical fiber line are not co-cable lines.

The detection device connected to the first optical fiber line and the detection device connected to the second optical fiber line may be the same detection device, or may be different detection devices.

In the detection method described in the embodiments of the disclosure, characteristic information of optical fiber lines in the same optical cable is relatively similar, and characteristic information of optical fiber lines in different optical cables is relatively different. By comparing the obtained line information of different optical fiber lines, it is determined whether the line information of different optical fiber lines meet the preset similarity, to further determine whether the different lines are co-cable lines.

Optionally, the first line information and the second line information each includes a plurality of pieces of parameter information, and comparing the first line information with the second line information includes:
comparing each piece of parameter information of the first line information with corresponding parameter information of the second line information, to determine whether the corresponding parameter information is a similar value parameter;
determining whether a quantity of similar value parameters between the first line information and the second line information is greater than or equal to a first preset quantity;
when the quantity of similar value parameters is greater than or equal to the first preset quantity, determining that the first line information and the second line information meet the preset similarity; and
when the quantity of similar value parameters is less than the first preset quantity, determining that the first line information and the second line information do not meet the preset similarity.

Optionally, multiple pieces of parameter information included in the first line information and the second line information include at least one of an optical fiber distance, a fusion splicing point location, a connection point location and signal attenuation information. The multiple pieces of parameter information of the first line information and the multiple pieces of the second line information determined by the detection device are compared one by one to determine whether the parameter information is a similar value parameter, and the quantity of the similar value parameters between the parameter information of the first line information and the second line information is counted to determine whether the first line information and the second line information meet the preset similarity.

In detail, the specific process of performing a detection on the optical fiber system described in the embodiments of the disclosure includes:
starting an EOTDR in a first optical fiber line (i.e., an optical fiber line on a primary routing), switching a signal to the first optical fiber line through an OLP, emitting a pulsed optical signal in both directions of the first optical fiber line, and testing the optical fiber line in both directions to obtain the first line information of the first optical fiber line;
starting an EOTDR in a second optical fiber line (i.e., an optical fiber line on a standby routing), switching a signal to the second optical fiber line through an OLP, emitting a pulsed optical signal in both directions of the second optical fiber line, and testing the optical fiber line in both directions to obtain the second line information of the second optical fiber line; and
comparing each piece of parameter information of the first line information with corresponding parameter information of the second line information to determine whether the corresponding parameter information is a similar value parameter.

In detail, the optical fiber distance, the fusion splicing point location, the connection point location and the signal attenuation information may be obtained accurately according to the line information obtained through an EOTDR detection. According to a characteristic that the optical fiber distance, the fusion splicing point location, the connection point location and the signal attenuation information in the same optical cable are in the same or similar states, and the optical fiber distance, the fusion splicing point location, the connection point location and the signal attenuation information in different optical cables are in different states, each piece of the parameter information included in the line information is compared one by one to determine whether the parameter information is a similar value parameter. The greater the quantity of similar value parameters between the parameter information, the higher the probability that the two optical fiber lines are co-cable lines. The smaller the quantity of the similar value parameters between the parameter information, the lower the probability that the two optical fiber lines are co-cable lines.

For example, the optical fiber distance in the first line information is compared with the optical fiber distance in the second line information. When a difference between the two optical fiber distances is less than a preset value, it is determined that the optical fiber distance in the first line information and the optical fiber distance in the second line information belong to the similar value parameters. When the difference between the two optical fiber distances is greater than the preset value, it is determined that the optical fiber distance in the first line information and the optical fiber distance in the second line information do not belong to similar value parameters.

The fusion splicing point location in the first line information is compared with the fusion splicing point location in the second line information. When a difference between the two fusion splicing point locations is less than a preset value, it is determined that the fusion splicing point location in the first line information and the fusion splicing point location in the second line information belong to the similar value parameters. When the difference between the two fusion splicing point locations is greater than or equal to the preset value, it is determined that the fusion splicing point location in the first line information and the fusion splicing point location in the second line information do not belong to the similar value parameters.

According to the above rules, each piece of the parameter information of the first line information is compared with the corresponding parameter information of the second line information one by one respectively, to obtain the quantity of the similar value parameters in the first line information and the second line information. A determined quantity is compared with the first preset quantity. When the quantity of the similar value parameters is greater than or equal to the first preset quantity, it means that the first line information and the second line information meet the preset similarity, and the first optical fiber line and the second optical fiber line are co-cable lines. When the quantity of the similar value parameters is less than the first preset quantity, it means that the first line information and the second line information do not meet the preset similarity, and the first optical fiber line and the second optical fiber line are not co-cable lines.

Optionally, the first preset quantity may be determined according to the quantity of pieces of parameter information of the line information obtained by actual detection.

In an implementation, the detection method of the embodiments of the disclosure further includes:
when the quantity of the similar value parameters is greater than or equal to the first preset quantity and less than a second preset quantity, determining that the first optical fiber line and the second optical fiber line are co-cable lines and part of the first optical fiber line and the second optical fiber line are co-cable lines;
when the quantity of the similar value parameters is greater than or equal to the first preset quantity and greater than or equal to the second preset quantity, determining that the first optical fiber line and the second optical fiber line are co-cable lines and entire of the first optical fiber line and the second optical fiber line are co-cable lines; in which
the second preset quantity is greater than the first preset quantity.

For example, if lengths of the optical fiber line between two node devices are consistent (which allows an error within 5 meters), attenuation is consistent (which allows an error within 1dB), and the connection point location and the fusion splicing point location are basically the consistent, it is determined that a probability of the two optical fiber lines being the co-cable lines is extremely high and entire of them are co-cable lines.

If the lengths of the optical fiber line between the two node devices are inconsistent (the difference is more than 10 meters), but the connection point location and the fusion splicing point location are basically the consistent, it can be determined that part of the two optical fiber lines are co-cable lines.

Therefore, by adopting the detection method described in the embodiments of the disclosure, the first preset quantity for determining whether the two optical fiber lines are co-cable lines and the second preset quantity for determining whether entire of the two optical fiber lines are co-cable lines are set according to a quantity of pieces of parameter information of obtained line information. When the quantity of the similar value parameters in the first line information and the second line information is greater than the second preset quantity, it is determined that entire of the first optical fiber line and the second optical fiber line are co-cable lines. When the quantity of the similar value parameters is greater than the first preset quantity and less than the second preset quantity, it is determined that part of the first optical fiber line and the second optical fiber line are co-cable lines. When the quantity of the similar value parameters is less than the first preset quantity, it is determined that the first optical fiber line and the second optical fiber line are not co-cable lines.

It should be noted that when further determining whether entire of the first optical fiber line and the second optical fiber line are co-cable lines or part of the first optical fiber line and the second optical fiber line are co-cable lines, in addition to determining the quantity of the similar value parameters, target parameter information in the line information can also be further determined.

For example, when the quantity of the similar value parameters is greater than or equal to the first preset quantity and greater than or equal to the second preset quantity, the target parameter information in the first line information and corresponding target parameter information in the second line information are the similar value parameters. That is, when the difference is less than a preset difference, it is determined that entire of the first optical fiber line and the second optical fiber line are co-cable lines. When the quantity of the similar value parameters is greater than or equal to the first preset quantity and greater than or equal to the second preset quantity, but the target parameter information in the first line information and the corresponding target parameter information in the second line information are not similar value parameters, it is determined that the first optical fiber line and the second optical fiber line have co-cable segments, but not entire of them are co-cable lines.

Optionally, in an embodiment of the disclosure, when each of the optical fiber lines includes a first line and a second line, the first line is connected to a first detection device, the second line is connected to a second detection device, and obtaining the line information of the connected optical fiber lines sent by the detection devices includes:
obtaining first line information of the first line of the connected optical fiber line sent by the first detection device, and second line information of the second line of the connected optical fiber line sent by the second detection device; in which
determining whether the at least two optical fiber lines are co-cable lines according to the line information of the at least two optical fiber lines includes:
   determining whether the at least two optical fiber lines are co-cable lines according to the first line information and the second line information of each of the at least two optical fiber lines.

The first detection device and the second detection device may be the same detection device, or may be different detection devices.

Optionally, determining whether the at least two optical fiber lines are co-cable lines according to the first line information and the second line information of each of the at least two optical fiber lines includes:
comparing first line information determined according to a first line of a first optical fiber line with second line information determined according to a first line of a second optical fiber line, to obtain a first comparison result; and comparing first line information determined according to a second line of the first optical fiber line with second line information determined according to a second line of the second optical fiber line, to obtain a second comparison result; and
determining whether the first optical fiber line and the second optical fiber line are co-cable lines according to the first comparison result and the second comparison result.

Optionally, determining whether the first optical fiber line and the second optical fiber line are co-cable lines according to the first comparison result and the second comparison result includes:
when the first comparison result indicates that the first line information determined according to the first line of the first optical fiber line and the second line information determined according to the first line of the second optical fiber line meet a preset similarity, and the second comparison result indicates that the first line information determined according to the second line of the first optical fiber line and the second line information determined according to the second line of the second optical fiber line meet the preset similarity, determining that the first optical fiber line and the second optical fiber line are co-cable lines.

The specific method of comparing the first line information with the second line information to determine whether the first line information and the second line information meet the preset similarity is as described above and will not be described in detail here.

In detail, in the detection method described in the embodiments of the disclosure, the first optical fiber line may be a primary routing optical fiber, and the second optical fiber line may be a standby routing optical fiber. By installing detection devices on the primary routing optical fiber and the standby routing optical fiber, the line information of the first line that transmits service signal along the first direction of the primary routing optical fiber is compared with the line information on the first line that transmits the service signal along the first direction of the standby routing optical fiber, and the line information on the second line that transmits the service signal along the second direction of the primary routing optical fiber is compared with the line information on the second line that transmits the service signal along the second direction of the standby routing optical fiber. When two comparison results show that the first line of the primary routing optical fiber and the first line of the standby routing optical fiber, and the second line of the primary routing optical fiber and the second line of the standby routing optical fiber both meet a requirement of the preset similarity, it is determined that the primary routing optical fiber and the standby routing optical fiber are co-cable lines, so as to achieve a detection for the entire primary and standby routing optical fibers, thereby ensuring the accuracy of the detection.

By adopting the optical fiber system and the detection method described in the embodiments of the disclosure, the detection device capable of emitting the pulsed optical signal is set in the optical fiber line. The detection device determines the line information of the optical fiber line by using the reflected optical signal of the pulsed optical signal reflected by the optical fiber line. On the basis, the determined line information of different optical fiber lines is analyzed, to determine whether the different optical fiber lines are co-cable lines.

The embodiments of the disclosure also provide a detection apparatus. As illustrated in FIG. 4, the apparatus 400 includes:
a signal sending module 410, configured to send a control signal to detection devices connected to at least two optical fiber lines respectively, so that the detection devices emit pulsed optical signals to the connected optical fiber lines according to the control signal;
an information obtaining module 420, configured to obtain line information of the connected optical fiber lines sent by the detection devices, in which the line information is determined by the detection devices according to reflected optical signals of the pulsed optical signals reflected by the optical fiber lines; and
a processing module 430, configured to determine whether the at least two optical fiber lines are co-cable lines according to the line information of the at least two optical fiber lines.

Optionally, in the detection apparatus, with the processing module 430, determining whether the at least two optical fiber lines are co-cable lines according to the line information of the at least two optical fiber lines includes:
comparing first line information determined by a detection device connected to a first optical fiber line with second line information determined by a detection device connected to a second optical fiber line; and
when the first line information and the second line information meet a preset similarity, determining that the first optical fiber line and the second optical fiber line are co-cable lines; or, when the first line information and the second line information do not meet the preset similarity, determining that the first optical fiber line and the second optical fiber line are not co-cable lines.

Optionally, in the detection apparatus, the first line information and the second line information each includes a plurality of pieces of parameter information, with the processing module 430, comparing the first line information with the second line information includes:
comparing each piece of parameter information of the first line information with corresponding parameter information of the second line information, to determine whether the corresponding parameter information is a similar value parameter;
determining whether a quantity of similar value parameters between the first line information and the second line information is greater than or equal to a first preset quantity;
when the quantity of similar value parameters is greater than or equal to the first preset quantity, determining that the first line information and the second line information meet the preset similarity; and
when the quantity of the similar value parameters is less than the first preset quantity, determining that the first line information and the second line information do not meet the preset similarity.

Optionally, in the detection apparatus, the processing module 430 is further configured to:
when the quantity of the similar value parameters is greater than or equal to the first preset quantity and less than a second preset quantity, determine that the first optical fiber line and the second optical fiber line are co-cable lines and part of the first optical fiber line and the second optical fiber line are co-cable lines;
when the quantity of similar value parameters is greater than or equal to the first preset quantity and greater than or equal to the second preset quantity, determine that the first optical fiber line and the second optical fiber line are co-cable lines and entire of the first optical fiber line and the second optical fiber line are co-cable lines; in which
the second preset quantity is greater than the first preset quantity.

Optionally, in the detection apparatus, each of the optical fiber lines includes a first line and a second line, the first line is connected to a first detection device, and the second line is connected to a second detection device, and with the information obtaining module 420, obtaining the line information of the connected optical fiber lines sent by the detection devices includes:
obtaining first line information of the first line of the connected optical fiber line sent by the first detection device, and second line information of the second line of the connected optical fiber line sent by the second detection device; in which
with the processing module 430, determining whether the at least two optical fiber lines are co-cable lines according to the line information of the at least two optical fiber lines includes:
   determining whether the at least two optical fiber lines are co-cable lines according to the first line information and the second line information of each of the at least two optical fiber lines.

Optionally, in the detection apparatus, with the processing module 430, determining whether the at least two optical fiber lines are co-cable lines according to the first line information and the second line information of each of the at least two optical fiber lines includes: comparing first line information determined according to a first line of a first optical fiber line with second line information determined according to a first line of a second optical fiber line, to obtain a first comparison result; and comparing first line information determined according to a second line of the first optical fiber line with second line information determined according to a second line of the second optical fiber line, to obtain a second comparison result; and
determining whether the first optical fiber line and the second optical fiber line are co-cable lines according to the first comparison result and the second comparison result.

Optionally, in the detection apparatus, with the processing module 430, determining whether the first optical fiber line and the second optical fiber line are co-cable lines according to the first comparison result and the second comparison result includes:
when the first comparison result indicates that the first line information determined according to the first line of the first optical fiber line and the second line information determined according to the first line of the second optical fiber line meet a preset similarity, and the second comparison result indicates that the first line information determined according to the second line of the first optical fiber line and the second line information determined according to the second line of the second optical fiber line meet the preset similarity, determining that the first optical fiber line and the second optical fiber line are co-cable lines.

The embodiments of the disclosure also provide a network device. The network device includes: a processor, a memory and a program stored on the memory and executable by the processor. When the program is executed by the processor, the detection method of any one of the above embodiments is implemented.

Optionally, the network device may be a network management system.

In combination with the above detailed description, those skilled in the art should understand that the specific implementation in which the processor in the network device described in the embodiments of the disclosure executes the detection method described in any of the above implementations, which will not be described in detail here.

In addition, specific embodiments of the disclosure provide a readable storage medium having a computer program stored thereon. When the computer program is executed by a processor, the steps in the detection method as described in any one of the above embodiments are implemented.

In detail, the readable storage medium is applied to the network device described above. When the readable storage medium is applied to the network device, the steps in the detection method are described in detail as above and will not be repeated herein.

In the embodiments of the disclosure, it should be understood that the disclosed methods and apparatuses, can be realized in other ways. For example, the above-described embodiments of the apparatus are merely schematic, e.g., division of the units described is merely based on logical functions, and may be realized in other ways in actual application. For example, a plurality of units or components may be combined or integrated into another system, or some features may be omitted or may not be implemented. In addition, mutual coupling or direct coupling or communication connection shown or discussed may be indirect coupling or communication connection implemented through some interfaces, apparatuses or units, which may be electrical, mechanical or other forms.

In addition, the functional units in each embodiment of the disclosure may be integrated in a single processing unit, or each unit may be physically separately, or two or more units may be integrated in a single unit. The above integrated units may be realized either in the form of hardware or in the form of hardware plus software functional units.

The above-described integrated unit may be realized in the form of a software function unit, and stored in a computer-readable storage medium. The above-described software function unit may be stored in a storage medium and include a number of instructions to cause a computer device (which may be a personal computer, a server, or a network device, etc.) to perform some of the steps of the detection method described in various embodiments of the disclosure. The afore-mentioned storage medium includes a USB flash drive, a removable hard disk, a read-only memory (ROM), a random access memory (RAM), a diskette or a CD-ROM, and other mediums that can store program codes.

The foregoing provides preferred embodiments of the disclosure, and it should be noted that for those skilled in the art, several improvements and modifications may be made without departing from the principles set forth in the disclosure, and these improvements and modifications should also be considered to be within the scope of protection of the disclosure.

## Claims

1. A detection method, comprising:
sending a control signal to detection devices connected to at least two optical fiber lines respectively, so that the detection devices emit pulsed optical signals to connected optical fiber lines according to the control signal;
obtaining line information of the connected optical fiber lines sent by the detection devices, wherein the line information is determined by the detection devices according to reflected optical signals of the pulsed optical signals reflected by the optical fiber lines;
determining whether the at least two optical fiber lines are co-cable lines according to the line information of the at least two optical fiber lines.

2. The method of claim 1, wherein determining whether the at least two optical fiber lines are co-cable lines according to the line information of the at least two optical fiber lines, comprises:
comparing first line information determined by a detection device connected to a first optical fiber line with second line information determined by a detection device connected to a second optical fiber line; and
in response to the first line information and the second line information meeting a preset similarity, determining that the first optical fiber line and the second optical fiber line are co-cable lines; or, in response to the first line information and the second line information not meeting the preset similarity, determining that the first optical fiber line and the second optical fiber line are not co-cable lines.

3. The method of claim 2, wherein the first line information and the second line information each comprises a plurality of pieces of parameter information, and comparing the first line information with the second line information comprises:
comparing each piece of parameter information of the first line information with corresponding parameter information of the second line information, to determine whether the corresponding parameter information is a similar value parameter;
determining whether a quantity of similar value parameters between the first line information and the second line information is greater than or equal to a first preset quantity;
in response to the quantity of the similar value parameters being greater than or equal to the first preset quantity, determining that the first line information and the second line information meet the preset similarity; and
in response to the quantity of similar value parameters being less than the first preset quantity, determining that the first line information and the second line information do not meet the preset similarity.

4. The method of claim 3, comprising:
in response to the quantity of the similar value parameters being greater than or equal to the first preset quantity and less than a second preset quantity, determining that the first optical fiber line and the second optical fiber line are co-cable lines and part of the first optical fiber line and the second optical fiber line are co-cable lines;
in response to the quantity of the similar value parameters being greater than or equal to the first preset quantity and greater than or equal to the second preset quantity, determining that the first optical fiber line and the second optical fiber line are co-cable lines and entire of the first optical fiber line and the second optical fiber line are co-cable lines; wherein
the second preset quantity is greater than the first preset quantity.

5. The method of claim 1, wherein each of the optical fiber lines comprises a first line and a second line, the first line is connected to a first detection device, and the second line is connected to a second detection device, and obtaining the line information of the connected optical fiber lines sent by the detection devices comprises:
obtaining first line information of the first line of the connected optical fiber line sent by the first detection device, and second line information of the second line of the connected optical fiber line sent by the second detection device; wherein,
determining whether the at least two optical fiber lines are co-cable lines according to the line information of the at least two optical fiber lines comprises:
determining whether the at least two optical fiber lines are co-cable lines according to the first line information and the second line information of each optical fiber line in the at least two optical fiber lines.

6. The method of claim 5, wherein determining whether the at least two optical fiber lines are co-cable lines according to the first line information and the second line information of each optical fiber line in the at least two optical fiber lines comprises:
comparing first line information determined according to a first line of a first optical fiber line with second line information determined according to a first line of a second optical fiber line, to obtain a first comparison result; and comparing first line information determined according to a second line of the first optical fiber line with second line information determined according to a second line of the second optical fiber line, to obtain a second comparison result; and
determining whether the first optical fiber line and the second optical fiber line are co-cable lines according to the first comparison result and the second comparison result.

7. The method of claim 6, wherein determining whether the first optical fiber line and the second optical fiber line are co-cable lines according to the first comparison result and the second comparison result, comprises:
in response to the first comparison result indicating that the first line information determined according to the first line of the first optical fiber line and the second line information determined according to the first line of the second optical fiber line meet a preset similarity, and the second comparison result indicating that the first line information determined according to the second line of the first optical fiber line and the second line information determined according to the second line of the second optical fiber line meet the preset similarity, determining that the first optical fiber line and the second optical fiber line are co-cable lines.

8. A detection method, comprising:
emitting a pulsed optical signal to a connected optical fiber line;
obtaining a reflected optical signal of the pulsed optical signal reflected by the optical fiber line; and
determining line information of the connected optical fiber line according to the reflected optical signal, wherein the line information is used to determine whether at least two optical fiber lines are co-cable lines.

9. The method of claim 8, wherein the at least two optical fiber lines comprise a first optical fiber line and a second optical fiber line, and the method comprises:
in response to first line information of the first optical fiber line and second line information of the second optical fiber line meeting a preset similarity, determining that the at least two optical fiber lines are co-cable lines; or, in response to the first line information of the first optical fiber line and the second line information of the second optical fiber line not meeting the preset similarity, determining that the at least two optical fiber lines are not co-cable lines.

10. The method of claim 9, wherein in response to a quantity of similar value parameters between the first line information and the second line information being greater than or equal to a first preset quantity, the first line information and the second line information meet the preset similarity; or, in response to the quantity of the similarity value parameters being less than the first preset quantity, the first line information and the second line information do not meet the preset similarity.

11. The method of claim 10, wherein in response to the quantity of the similar value parameters being greater than or equal to the first preset quantity and less than a second preset quantity, the first optical fiber line and the second optical fiber line are co-cable lines and part of the first optical fiber line and the second optical fiber line are co-cable lines; or, in response to the quantity of the similar value parameters being greater than or equal to the first preset quantity and greater than or equal to the second preset quantity, the first optical fiber line and the second optical fiber line are co-cable lines and entire of the first optical fiber line and the second optical fiber line are co-cable lines, wherein the second preset quantity is greater than the first preset quantity.

12. The method of claim 8, wherein the optical fiber line comprises a first line and a second line; and
emitting the pulsed optical signal to the connected optical fiber line in the at least two optical fiber lines comprises:
inputting a first pulsed optical signal transmitted along a first direction to the first line, and inputting a second pulsed optical signal transmitted along a second direction to the second line; wherein,
obtaining the reflected optical signal of the pulsed optical signal reflected by the optical fiber line comprises:
obtaining a first reflected optical signal of the first pulsed optical signal reflected by the optical fiber line, and obtaining a second reflected optical signal of the second pulsed optical signal reflected by the second line; and
determining the line information of the connected optical fiber line according to the reflected optical signal comprises:
determining line information of the first line according to the first reflected optical signal, and determining line information of the second line according to the second reflected optical signal.

13. The method of claim 8, wherein the line information comprises at least one of an optical fiber distance, a fusion splicing point location, a connection point location and signal attenuation information.

14. A detection apparatus, comprising:
a signal sending module, configured to send a control signal to detection devices connected to at least two optical fiber lines respectively, so that the detection devices emit pulsed optical signals to the connected optical fiber lines according to the control signal;
an information obtaining module, configured to obtain line information of the connected optical fiber lines sent by the detection devices, wherein the line information is determined by the detection devices according to reflected optical signals of the pulsed optical signals reflected by the optical fiber lines; and
a processing module, configured to determine whether the at least two optical fiber lines are co-cable lines according to the line information of the at least two optical fiber lines.

15. A detection device connected to an optical fiber line, configured to:
emit a pulsed optical signal to the connected optical fiber line;
obtain a reflected optical signal of the pulsed optical signal reflected by the optical fiber line; and
determine line information of the connected optical fiber line according to the reflected optical signal, wherein the line information is used to determine whether at least two optical fiber lines are co-cable lines.

16. The device of claim 15, wherein the at least two optical fiber lines are connected between a first routing node and a second routing node.

17. The device of claim 16, wherein the at least two optical fiber lines comprise a first optical fiber line and a second optical fiber line;
in response to first line information of the first optical fiber line and second line information of the second optical fiber line meeting a preset similarity, it is determined that the at least two optical fiber lines are co-cable lines; or, in response to the first line information of the first optical fiber line and the second line information of the second optical fiber line not meeting the preset similarity, it is determined that the at least two optical fiber lines are not co-cable lines.

18. The device of claim 17, wherein in response to a quantity of similar value parameters between the first line information and the second line information being greater than or equal to a first preset quantity, the first line information and the second line information meet the preset similarity; or, in response to the quantity of similarity value parameters being less than the first preset quantity, the first line information and the second line information do not meet the preset similarity.

19. The device of claim 17, wherein in response to the quantity of the similar value parameters being greater than or equal to the first preset quantity and less than a second preset quantity, the first optical fiber line and the second optical fiber line are co-cable lines and part of the first optical fiber line and the second optical fiber line are co-cable lines; or, in response to the quantity of the similar value parameters being greater than or equal to the first preset quantity and greater than or equal to the second preset quantity, the first optical fiber line and the second optical fiber line are co-cable lines and entire of the first optical fiber line and the second optical fiber line are the co-cable lines, wherein the second preset quantity is greater than the first preset quantity.

20. The device of claim 15, wherein the optical fiber line comprises a first line and a second line; and
the detection device comprises:
a first detection device connected to the first line and configured to detect first line information of the first line; and
a second detection device connected to the second line and configured to detect second line information of the second line.

21. The device of claim 20, wherein the first detection device is configured to input a first pulsed optical signal transmitted along a first direction to the first line, obtain a first reflected optical signal of the first pulsed optical signal reflected by the optical fiber line, and determine line information of the first line according to the first reflected optical signal; and
the second detection device is configured to input a second pulsed optical signal transmitted along a second direction to the second line, obtain a second reflected optical signal of the second pulsed optical signal reflected by the second line, and determine line information of the second line according to the second reflected optical signal.

22. The device of claim 15, wherein the line information comprises at least one of an optical fiber distance, a fusion splicing point location, a connection point location and signal attenuation information.

23. The device of claim 15, wherein the detection device is an embedded optical time domain reflectometer (EOTDR).

24. An optical fiber system, comprising:
at least two optical fiber lines connected between a first routing node and a second routing node;
detection devices, wherein a signal input end of each optical fiber line is connected to at least one of the detection devices respectively, and the detection device is configured to emit a pulsed optical signal to the connected optical fiber line, obtain a reflected optical signal of the pulsed optical signal reflected by the optical fiber line, and determine line information of the optical fiber line according to the reflected optical signal; and
an analysis device, configured to determine whether the at least two optical fiber lines are co-cable lines according to line information of the at least two optical fiber lines.

25. The system of claim 24, wherein each of the optical fiber lines comprises a first line and a second line, the first line is connected to a first detection device, and the second line is connected to a second detection device, and
the analysis device is configured to determine whether the at least two optical fiber lines are co-cable lines according to first line information of the first line of the optical fiber line connected to the first detection device of each optical fiber line in the at least two optical fiber lines and second line information of the second line of the optical fiber line connected to the second detection device.

26. The system of claim 25, wherein the first detection device is configured to input a first pulsed optical signal transmitted along a first direction to the first line, and determine the first line information according to a first reflected optical signal of the first pulsed optical signal reflected by the optical fiber line; and
the second detection device is configured to input a second pulsed optical signal transmitted along a second direction to the second line, and determine the second line information according to a second reflected optical signal of the second pulsed optical signal reflected by the second line.

27. The system of claim 24, wherein the line information comprises at least one of an optical fiber distance, a fusion splicing point location, a connection point location and signal attenuation information.

28. The system of claim 24, wherein each of the detection devices comprises an embedded optical time domain reflectometer (EOTDR).

29. A network device comprising: a processor, a memory and a program stored on the memory and executable by the processor, wherein when the program is executed by the processor, the detection method of any one of claims 1-13 is implemented.

30. A readable storage medium having a program stored thereon, wherein when the program is executed by a processor, the detection method of any one of claims 1-13 is implemented.
